# FASCICULE DE BREVET EUROPEEN

(11) **EP 3 283 372 B1**
(45) Date de publication et mention de la délivrance du brevet: **01.09.2021**
(21) Numéro de dépôt: 16713936.9
(22) Date de dépôt: 05.04.2016
(51) Int. Cl.: B64D 11/06

(54) **MODULE DE SIEGES MUNI D'UNE TABLETTE A CONFIGURATION OPTIMISEE**
SITZMODUL MIT EINEM SERVIERTISCH MIT OPTIMIERTEM DESIGN
SEAT MODULE COMPRISING A TRAY TABLE WITH AN OPTIMISED DESIGN

(30) Priorité: 13.04.2015 US 201562146662 P
(43) Date de publication de la demande: 21.02.2018
(73) Titulaire: Safran Seats, 78370 Plaisir (FR)
(72) Inventeur: DUCREUX, Christophe, 36100 Issoudun (FR); EHRMANN, Charles, 36100 Issoudun (FR); FOUCHER, Benjamin, 36100 Issoudun (FR)
(74) Mandataire: Marconnet, Sébastien
(86) Numéro de dépôt international: PCT/EP2016/057416
(87) Numéro de publication internationale: WO 2016/165978

(56) Documents cités:
- WO-A1-2008/031506
- WO-A1-2011/089558
- WO-A2-00/21831
- US-A1- 2013 248 655

## Description

La présente invention porte sur un module de siège muni d'une tablette à configuration optimisée.

On connaît des modules de siège destinés à être installés dans une cabine d'aéronef comportant un siège apte à prendre au moins une position assise et une position allongée, une coque positionnée autour du siège, ainsi qu'une tablette située dans la face arrière de la coque. La tablette est configurée pour être déplacée entre une position repliée et une position dépliée fonctionnelle permettant au passager de poser des objets sur la tablette.

Le document WO2011/089558 décrit un module de sièges destiné à être installé dans une cabine d'aéronef comportant deux sièges et une tablette associée à chaque siège. La tablette est mobile entre une position repliée et une position dépliée.

Le document WO2008/031506 décrit un module de sièges muni d'une tablette associée à chaque siège. La tablette est mobile entre une position repliée et une position dépliée.

L'invention vise à améliorer le confort du passager en proposant un module de sièges selon la revendication 1.

L'invention permet ainsi de disposer d'une tablette pouvant prendre une position déployée et une position décalée autorisant le passager à écarter la tablette supportant des objets pour libérer l'espace devant lui, ce qui facilite l'accès au couloir de la cabine.

Selon une réalisation, un axe normal à une face arrière de la tablette, lorsque la tablette est en position repliée, est incliné par rapport à un axe d'extension dudit siège.

Selon une réalisation, le siège présente un axe d'extension et la tablette comporte au moins un bord latéral de la tablette incliné par rapport à l'axe d'extension du siège, lorsque la tablette se trouve en position dépliée et/ou sensiblement parallèle à l'axe d'extension du siège, lorsque la tablette se trouve en position dépliée décalée.

Selon une réalisation, la tablette est en outre mobile en translation suivant une direction parallèle à l'axe d'extension du siège autour de la position dépliée décalée. Le passager peut ainsi adapter la distance de la tablette par rapport à sa morphologie de manière à être installé confortablement pour une séance de travail ou pour profiter de son repas.

Selon une réalisation, la tablette comporte un support monté mobile en rotation par rapport à la coque, notamment via une charnière.

Selon une réalisation, la tablette comporte un plateau mobile en translation et/ou en rotation par rapport au support.

Selon une réalisation, ledit module de sièges comporte en outre une coque entourant en partie le siège.

Selon une réalisation, une portion de la coque et une face arrière du siège délimite un volume interne accessible par une ouverture réalisée dans ladite coque, en particulier obturée par la tablette lorsque la tablette est position repliée. Cela permet d'optimiser le volume du siège en permettant de loger des objets à l'intérieur de cet espace interne.

Selon une réalisation, un dispositif de rangement est positionné à l'intérieur du volume interne.

Les axes d'extension des sièges sont inclinés l'un par rapport à l'autre et se coupent en un point, notamment situé derrière les sièges. Cette configuration en V inversé par rapport à une configuration dans laquelle la pointe du V se situe au niveau du repose-pieds des passager permet de rapprocher les passagers l'un de l'autre pour faciliter leur interaction lors d'une séance de travail.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- Les figures 1a à 1d sont des vues en perspective illustrant différentes positions d'une tablette d'un module de siège selon la présente invention;
- Les figures 2a et 2b sont des vues en perspective illustrant l'intégration d'une paroi escamotable permettant la création d'une zone de travail collaborative pour des modules à deux sièges selon l'invention;
- Les figures 3a et 3b sont des vues en perspective illustrant un accoudoir, respectivement dans une position abaissée et dans une position relevée selon la présente invention;
- Les figures 4a et 4b sont des vues en perspective détaillées illustrant un couvercle amovible d'une paroi supérieure d'un accoudoir, respectivement dans une position fermée et dans une position ouverte, selon l'invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

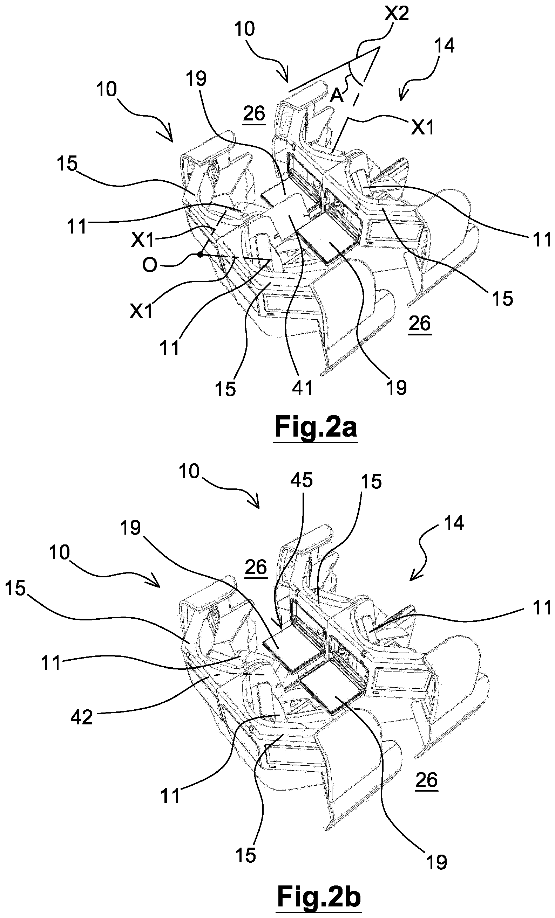

Comme cela est illustré par les figures 2a et 2b, un arrangement d'une cabine 14 d'aéronef comporte une rangée d'au moins deux modules de sièges 10 positionnés les uns derrière les autres. A l'intérieur de la rangée, les modules de sièges 10 peuvent être orientés de telle façon que les sièges sont tournés vers l'avant et/ou vers l'arrière de l'aéronef.

Toutefois, il est à noter que, dans la suite de la description, les termes "avant" et "arrière" définissent localement la position relative des sièges à l'intérieur de la rangée et ne se réfèrent aucunement à une orientation des sièges à l'intérieur de la cabine de l'aéronef. En d'autres termes, l'expression "module de siège avant" signifie que le module de siège est positionné directement devant un autre module de siège à l'intérieur de la rangée, tandis que l'expression "module de siège arrière" signifie que le module de siège est positionné directement derrière un autre module de siège à l'intérieur de la rangée.

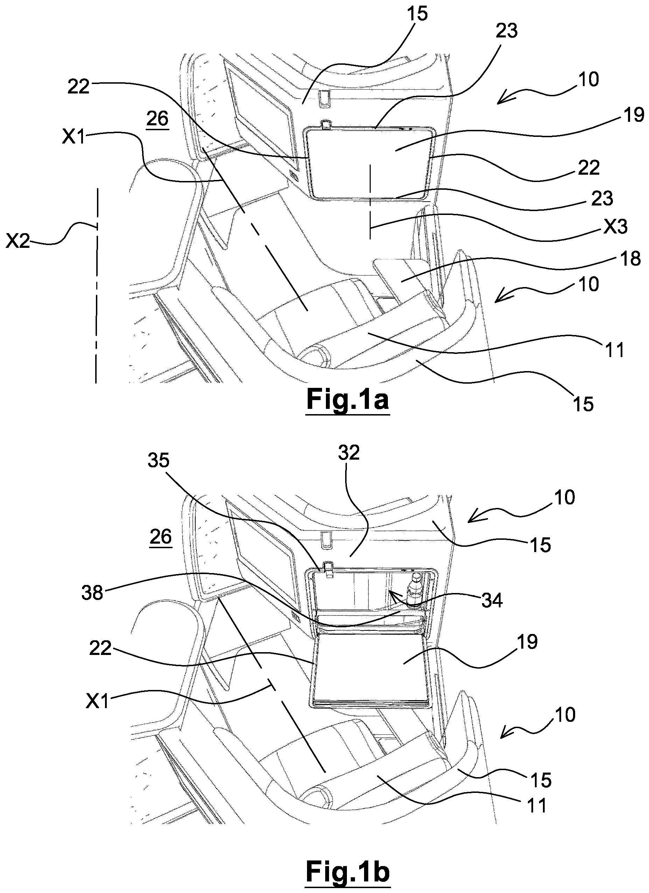

Comme cela est bien visible sur les figures 1a à 1d, un module de sièges 10 comporte au moins un siège 11, avantageusement pourvu d'une cinématique lui permettant d'être mobile entre une position relevée, dans laquelle le siège 11 est configurée pour définir une position assise d'un passager, et une position inclinée, dans laquelle le siège 11 est configurée pour définir une surface de couchage du passager, avantageusement sensiblement horizontale.

Le siège 11 comporte un axe d'extension X1 défini par l'intersection entre un plan horizontal et un plan médian vertical du siège 11. Avantageusement, le plan médian vertical du siège 11 est également un plan de symétrie du siège 11.

Selon un exemple de réalisation présenté sur les figures, l'axe d'extension X1 du siège 11 est incliné par rapport à un axe longitudinal X2 de l'aéronef. Dans un tel agencement, l'axe d'extension X1 du siège 11 et l'axe longitudinal X2 de l'aéronef forment entre eux un angle A, visible sur la figure 2a.

De plus, le module de sièges 10 comporte au moins une coque 15 permettant, notamment, de garantir l'intimité du passager assis sur le siège 11. Selon une alternative particulière de réalisation, la coque 15 entoure au moins en partie le siège 11. Par ailleurs, la coque 15 peut également entourer au moins en partie un accoudoir 18 du siège 11.

De plus, le module de sièges 10 comporte en outre au moins une tablette 19, en particulier positionnée sur une face arrière de la coque 15. La tablette 19 est mobile entre une position repliée, telle que montrée sur la figure 1a, et une position dépliée, telle que montrée sur la figure 1b. Préférentiellement, la tablette 19 peut présenter une position dépliée décalée.

Lorsque la tablette 19 se trouve en position repliée, un axe normal X3 à une face arrière de la tablette 19 est incliné par rapport à l'axe d'extension X1 du siège 11 correspondant. Par "incliné", on entend le fait que l'axe normal X3 et l'axe d'extension X1 forment un angle non nul l'un par rapport à l'autre.

Comme on peut le voir sur la figure 1b, un bord latéral 22 de la tablette 19 est incliné par rapport à l'axe d'extension X1 du siège 11 correspondant lorsque la tablette 19 se trouve en position déployée décalée. Par "incliné", on entend le fait que le bord latéral 22 et l'axe d'extension X1 forment un angle non nul l'un par rapport à l'autre.

Il est à noter que le bord latéral 22 dont il est question dans la présente description correspond à un des bords de la tablette 19 ayant une orientation sensiblement verticale lorsque la tablette 19 est en position repliée.

Par ailleurs, la tablette 19 peut également comporter au moins un bord transversal 23 ayant une orientation sensiblement horizontale, telle que présentée sur la figure 1a.

Ainsi, en position dépliée, le plan médian vertical du siège 11 arrière ne coupe pas la tablette 19 du siège 11 avant qui est ainsi décalée par rapport au passager. Cela permet de faciliter l'accès du passager à une allée de circulation 26 de l'aéronef, visible sur les figures 2a et 2b.

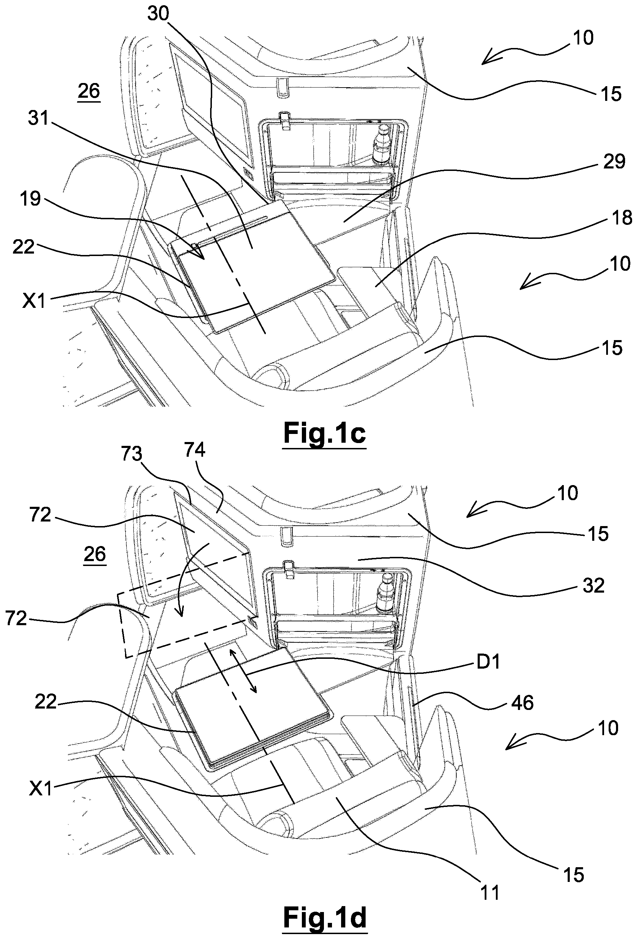

La tablette 19 est en outre mobile en translation et/ou rotation par rapport au siège 11 pour passer de la position dépliée à une position dépliée décalée, telle que présentée sur la figure 1c.

Lorsque la tablette 19 se trouve en position dépliée décalée, l'axe d'extension X1 du siège 11 est sensiblement parallèle au bord latéral 22 de la tablette 19 et/ou sensiblement perpendiculaire au bord transversal 23 de la tablette 19.

En position dépliée décalée, le plan médian vertical du siège 11 arrière coupe la tablette 19 du siège avant 11. La tablette 19 se situe ainsi en face du passager qui est alors confortablement installé pour profiter de son repas ou pour travailler.

De préférence, la tablette 19 est en outre mobile en translation suivant une direction de déplacement D1, avantageusement parallèle à l'axe d'extension X1 du siège 11, autour de la position dépliée décalée. Il est ainsi possible d'adapter une distance d'éloignement de la tablette 19 par rapport au passager.

Afin d'assurer les déplacements d'une position à l'autre, la tablette 19 comporte un support 29, visible sur la figure 1c. Le support 29 est préférentiellement monté mobile en rotation par rapport à la coque 15, notamment via une charnière 30 implantée sur la coque 15, pour permettre son passage de la position repliée à la position dépliée.

La tablette 19 comporte en outre un plateau 31, avantageusement mobile, notamment en translation et/ou en rotation par rapport au support 29, pour permette le passage de la tablette 19 de la position dépliée à la position dépliée décalée et inversement.

Par ailleurs, comme on peut le voir sur la figure 1b, une portion 32 de la coque 15 et la face arrière du siège 11 délimite un volume interne 34 accessible par une ouverture 35 réalisée dans la coque 15. L'ouverture 35 est avantageusement, en tout ou partie, obturée par la tablette 19 lorsque la tablette 19 est position repliée.

Additionnellement, un dispositif de rangement 38 est positionné à l'intérieur du volume interne 34. Un tel dispositif de rangement 38 pourra, par exemple, prendre la forme d'un porte-bouteille ou d'un range-documents.

Dans l'exemple de réalisation des figures 2a et 2b, le module de sièges 10 comporte deux sièges 11 et deux coques 15 respectivement positionnées autour d'un siège 11 correspondant. Les axes d'extension X1 des deux sièges 11 d'un même module de sièges 10 sont inclinés l'un par rapport à l'autre et se coupent en un point d'intersection O. Selon une variante avantageuse de réalisation, le point d'intersection O est situé derrière les sièges 11. Ainsi, chaque siège 11 du module de sièges 10 est tourné en direction de l'allée de circulation 26. Les sièges 11 du module de sièges 10 sont orientés dans des directions différentes.

En complément, une paroi 41 est positionnée entre les deux sièges 11. Avantageusement, la paroi 41 est escamotable et peut être déplacée entre une position déployée, telle que présentée sur la figure 2a, et une position rétractée, telle que présentée sur la figure 2b. En position rétractée, la paroi 41 pourra être positionnée à l'intérieur d'un logement 42, préférentiellement situé à une jonction entre les coques 15 des sièges 11 du module de sièges 10.

La mise en position rétractée de la paroi 41 permet de créer une zone de travail collaboratif 45 lorsque les tablettes 19 des deux sièges 11 du module 10 se trouvent en position dépliée de manière à être positionnées l'une à côté de l'autre. L'écart entre les deux bords latéraux 22 des tablettes 19 en vis-à-vis l'un de l'autre est inférieur à 50 cm, de préférence inférieur à 30 cm.

Le passage de la paroi escamotable 41 d'une position rétractée à une position déployée pourra être obtenu en faisant coulisser la paroi 41 le long d'une glissière 46 ménagée dans une des coques 15 du siège 11, notamment visible en figure 1d.

Le module de sièges 10 comportant deux sièges 11 pourra être réalisé d'un seul bloc comportant deux sièges 11 et une coque 15 entourant au moins en partie les deux sièges 11 ou formé à partir de deux demi-blocs assemblés entre eux et comportant chacun un siège 11 et une coque 15 associée.

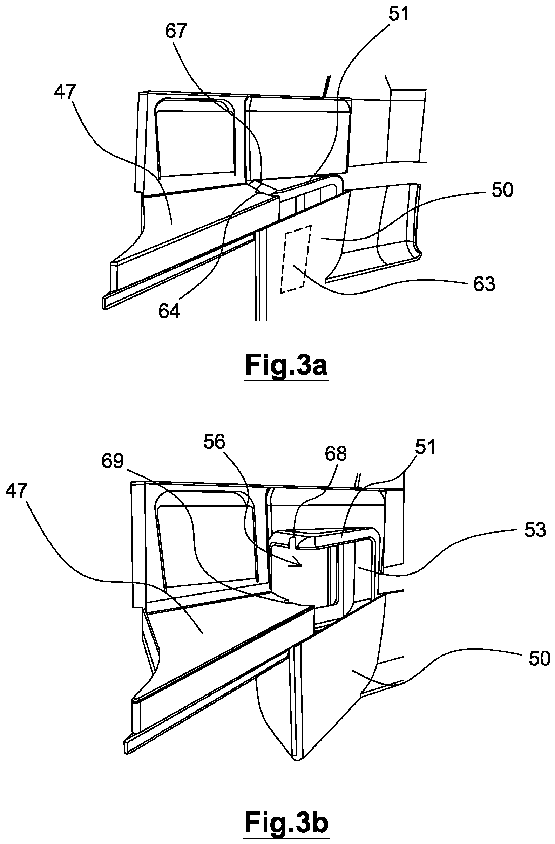

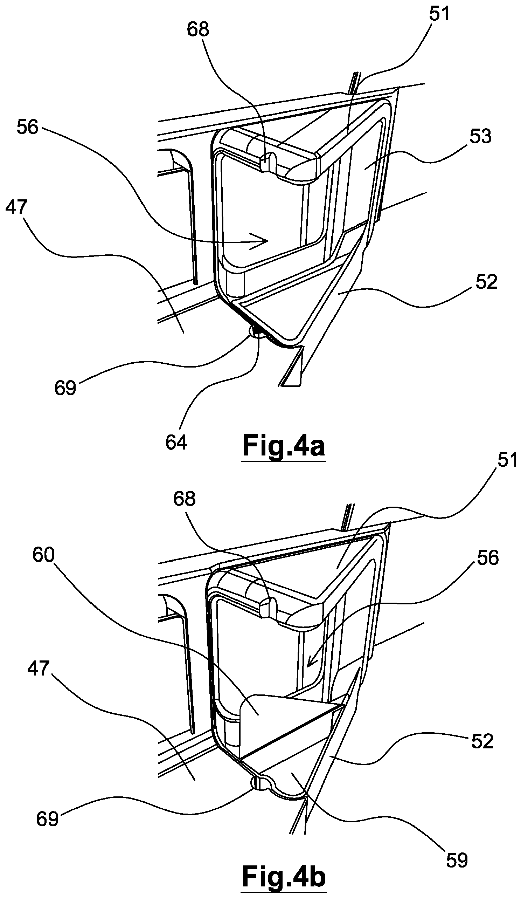

Dans certains modes de réalisation, tels que ceux illustrés aux figures 3a, 3b, 4a, 4b, le module de siège 10 comporte un coussin 47 situé à proximité du siège 11. Le coussin 47 est, de préférence, un coussin de maximisation de la surface de couchage destiné à être positionné dans le même plan que la surface du siège 11 lorsque ce dernier est en position allongée. En variante, le coussin 47 pourra toutefois être positionné à un niveau différent. Avantageusement, le coussin 47 est décalé latéralement par rapport au siège 11.

Par ailleurs, selon une variante de réalisation, l'accoudoir 18 est mobile entre une position abaissée, telle que montrée en figure 3a, et une position relevée, telle que montrée en figure 3b. Le passage de la position abaissée à la position relevée de l'accoudoir 18 peut notamment être réalisé à l'aide d'un mécanisme à glissière, préférentiellement installé dans un boîtier 50 recevant l'accoudoir 18 lorsque ce dernier est en position abaissée.

Comme cela est visible sur la figure 4a, l'accoudoir 18 peut comporter une paroi supérieure 51 sur laquelle le passager peut prendre appui en y posant son coude lorsque l'accoudoir 18 est dans la position relevée et peut comporter une paroi inférieure 52. La paroi supérieure 51 et la paroi inférieure 52 sont reliées entre elles par une paroi de liaison 53. Avantageusement, la paroi de liaison 53 est déportée vers une surface extérieure de l'accoudoir 18. Ainsi agencé, la paroi inférieure 52 est située du côté opposé à la paroi supérieure 51. L'accoudoir 18 présente ainsi une forme ouverte du côté du siège 11.

Un tel agencement permet de définir un volume interne d'accoudoir. Il est alors possible d'intégrer dans le volume interne un dispositif de rangement 56, tel qu'un range-documents.

Comme illustré par la figure 3a, selon un exemple préférentiel de réalisation, la paroi supérieure 51 de l'accoudoir 18 se situe dans le prolongement du coussin 47, lorsque l'accoudoir 18 est en position abaissée. En outre, comme illustré par la figure 4a, la paroi inférieure 52 de l'accoudoir 18 se situe dans le prolongement du coussin 47, lorsque l'accoudoir 18 est en position relevée et que la paroi supérieure 51 fait saillie par rapport au coussin 47. Une telle configuration permet de maximiser la surface de couchage quelle que soit la position de l'accoudoir 18 par rapport au coussin 47.

De préférence, la paroi inférieure 52 de l'accoudoir 18 présente une ouverture 59, par exemple fermée par un couvercle 60, notamment amovible, tel que présenté sur la figure 4b. L'ouverture 59 donne accès à un volume de stockage disposé sous la paroi inférieure 52, et en particulier agencé dans le boîtier 50 recevant l'accoudoir 18. Cela permet au passager de ranger des objets de petite taille à l'intérieur du volume de stockage 59, par exemple une paire de lunettes.

Selon une variante de réalisation, un dispositif de stockage d'énergie 63 est agencé dans le boîtier 50 ou dans l'accoudoir 18. Le dispositif de stockage d'énergie 63 est représenté de façon schématique en figure 3a. Le dispositif de stockage d'énergie 63 est apte à emmagasiner une énergie mécanique lors d'un déplacement de l'accoudoir 18 de la position relevée vers la position abaissée et à libérer cette énergie mécanique pour faciliter le passage de la position abaissée à la position relevée. Le dispositif de stockage d'énergie 63 pourra, par exemple, prendre la forme d'un vérin à gaz ou à ressort.

De façon complémentaire, un moyen de commande 64 apte à permettre la libération de l'énergie stockée par le dispositif de stockage d'énergie 63, tel qu'un bouton, est situé à proximité de l'accoudoir 18. Préférentiellement, le moyen de commande 64 est disposé à l'intérieur d'un logement 67 accessible par le passager. Selon un mode particulier de réalisation, le logement 67 est délimité par deux échancrures 68, 69 ménagées respectivement dans la paroi supérieure 51 de l'accoudoir 18 et dans le coussin 47.

On appréciera qu'un tel accoudoir 18 pourra être installé sur le module de siège 10 précédemment décrit mais également sur tout autre type de module de siège 10 ou tout type de siège 11 comportant un coussin 47 et dont on souhaite améliorer l'ergonomie.

En outre, un dispositif d'affichage 72 d'un système multimédia, tel qu'un écran est monté mobile par rapport à la coque 15 entre une position rangée, dans laquelle le dispositif d'affichage 72 est positionné à l'intérieur d'un logement 73 ménagé dans une portion 74 de la coque 15, et une position déployée, dans laquelle le dispositif d'affichage 72 se situe en face du passager, notamment dans une position dans laquelle l'axe d'extension X1 du siège 11 est perpendiculaire au dispositif d'affichage 72, telle que présentée sur la figure 1d.

La portion 32 de la coque 15 délimitant le volume interne 34, apte à définir le dispositif de rangement 38, et la portion 74 de la coque 15 délimitant le logement 73, apte à recevoir le dispositif d'affichage 72 sont inclinées l'une par rapport à l'autre.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association. La portée de l'invention est définie par les revendications annexées.

## Revendications

1. Module de sièges (10) destiné à être installé dans une cabine d'aéronef (14) comportant:
- deux sièges (11) ayant chacun un axe d'extension (X1), les axes d'extension (X1) des deux sièges étant inclinés l'un par rapport à l'autre, lesdits axes d'extension (X1) se coupant en un point d'intersection (O), et
- une tablette (19) associée à chaque siège, ladite tablette étant mobile entre une position repliée et une position dépliée,
- chaque tablette (19) étant en outre mobile en translation et/ou rotation par rapport au siège (11) pour passer de la position dépliée à une position dépliée décalée,
**caractérisé en ce que** lorsque les tablettes (19) des deux sièges (11) se situent en position dépliée et qu'une paroi de séparation (41) entre les deux sièges (11) est mise en position rétractée, lesdites tablettes (19) sont positionnées l'une à côté de l'autre de sorte qu'un écart entre deux bords latéraux (22) des tablettes (19) en vis-à-vis l'un de l'autre est inférieur à 50cm, de préférence inférieur à 30cm, de manière à créer une zone de travail collaboratif.

2. Module de sièges (10) selon la revendication 1, **caractérisé en ce qu'**un axe normal (X3) à une face arrière de la tablette (19), lorsque la tablette (19) est en position repliée, est incliné par rapport à un axe d'extension (X1) dudit siège (11).

3. Module de sièges (10) selon la revendication 1 ou 2, **caractérisé en ce que** le siège (11) présente un axe d'extension (X1) et la tablette (19) comporte au moins un bord latéral (22) de la tablette (19) incliné par rapport à l'axe d'extension (X1) du siège (11), lorsque la tablette (19) se trouve en position dépliée et/ou sensiblement parallèle à l'axe d'extension (X1) du siège (11), lorsque la tablette (19) se trouve en position dépliée décalée.

4. Module de sièges (10) selon la revendication 3, **caractérisé en ce que** la tablette (19) est en outre mobile en translation suivant une direction parallèle à l'axe d'extension (X1) du siège (11) autour de la position dépliée décalée.

5. Module de sièges (10) selon l'une quelconque des revendications 1 à 4, **caractérisé en ce que** la tablette (19) comporte un support (29) monté mobile en rotation par rapport à la coque (15), notamment via une charnière (30).

6. Module de sièges (10) selon la revendication 5, **caractérisé en ce que** la tablette (19) comporte un plateau (31) mobile en translation et/ou en rotation par rapport au support (29).

7. Module de sièges (10) selon l'une quelconque des revendications 1 à 6, **caractérisé en ce qu'**il comporte en outre une coque (15) entourant en partie le siège (11).

8. Module de sièges (10) selon la revendication 7, **caractérisé en ce qu'**une portion (32) de la coque (15) et une face arrière du siège (11) délimite un volume interne (34) accessible par une ouverture (35) réalisée dans ladite coque (15), en particulier obturée par la tablette (19) lorsque la tablette (19) est position repliée.

9. Module de sièges (10) selon la revendication 8, **caractérisé en ce qu'**un dispositif de rangement (38) est positionné à l'intérieur du volume interne (34).

## Patentansprüche

1. Sitzmodul (10) für eine Flugzeugkabine (14), wobei das Sitzmodul umfasst:
- zwei Sitze (11) mit jeweils einer Erstreckungsachse (X1), wobei die Erstreckungsachsen (X1) der beiden Sitze gegeneinander geneigt sind, wobei sich die Erstreckungsachsen (X1) in einem Schnittpunkt (O) schneiden, und
- eine jedem Sitz zugeordnete Tabletttisch (19), wobei der Tabletttisch zwischen einer gefalteten Position und einer aufgeklappten Position bewegbar ist,
- jede Tabletttisch (19) weiterhin in Translation und/oder Rotation relativ zum Sitz (11) von der aufgeklappten Position in eine versetzte aufgeklappte Position beweglich ist,
**dadurch gekennzeichnet, dass**, wenn sich die Tabletttische (19) der beiden Sitze (11) in der aufgeklappten Position befinden und eine Trennwand (41) zwischen den beiden Sitzen (11) in eine eingefahrene Position gebracht wird, die Tabletttische (19) nebeneinander positioniert sind, so dass ein Spalt zwischen zwei einander zugewandten Seitenkanten (22) der Tabletttische (19) weniger als 50cm, vorzugsweise weniger als 30cm beträgt, um einen gemeinschaftlichen Arbeitsbereich zu schaffen.

2. Sitzmodul (10) nach Anspruch 1, **dadurch gekennzeichnet, dass** eine Achse (X3) normal zu einer Rückseite dem Tabletttisch (19) bei der aufgeklappten Position dem Tabletttisch (19) relativ zu einem Erstreckungsachse (X1) des Sitzes (11) geneigt ist.

3. Sitzmodul (10) nach Anspruch 1 oder 2, **dadurch gekennzeichnet, dass** der Sitz (11) eine Erstreckungsachse (X1) aufweist und der Tabletttisch (19) mindestens eine Seitenkante (22) der Tabletttisch (19) umfasst, die zur Erstreckungsachse (X1) des Sitzes (11) geneigt ist, wenn sich der Tabletttisch (19) in der aufgeklappten Position und/oder im Wesentlichen parallel zur Erstreckungsachse (X1) des Sitzes (11) befindet, wenn sich der Tabletttisch (19) in der versetzten aufgeklappten Position befindet.

4. Sitzmodul (10) nach Anspruch 3, **dadurch gekennzeichnet, dass** der Tabletttisch (19) in einer Richtung parallel zur Erstreckungsachse (X1) des Sitzes (11) um die versetzte aufgeklappte Position weiter in Translation bewegbar ist.

5. Sitzmodul (10) nach einem der Ansprüche 1 bis 4, **dadurch gekennzeichnet, dass** der Tabletttisch (19) einen relativ zur Schale (15) drehbeweglich gelagerten Träger (29), in insbesondere über ein Scharnier (30), umfasst.

6. Sitzmodul (10) nach Anspruch 5, **dadurch gekennzeichnet, dass** der Tabletttisch (19) eine relativ zum Träger (29) in Translation und/oder Rotation bewegbare Platte (31) umfasst.

7. Sitzmodul (10) nach einem der Ansprüche 1 bis 6, **dadurch gekennzeichnet, dass** es ferner eine den Sitz (11) teilweise umgebende Schale (15) umfasst.

8. Sitzmodul (10) nach Anspruch 7, **dadurch gekennzeichnet, dass** ein Abschnitt (32) der Schale (15) und eine Rückseite des Sitzes (11) ein Innenvolumen (34) begrenzen, der durch eine Öffnung (35) in der Schale (15) zugänglich ist, welche insbesondere durch der Tabletttisch (19) verschlossen ist, wenn sich der Tabletttisch (19) in der gefalteten Position befindet.

9. Sitzmodul (10) nach Anspruch 8, **dadurch gekennzeichnet, dass** innerhalb des Innenvolumens (34) eine Ablageeinrichtung (38) positioniert ist.

## Claims

1. A seat module (10) for an aircraft cabin (14), said seat module comprising:
- two seats (11) each having an extension axis (X1), the extension axis (X1) of the two seats being inclined relative to one another, said extension axis (X1) intersecting at a point of intersection (O), and
- a tray table (19) associated with each seat, said tray table being movable between a folded position and an unfolded position,
- each tray table (19) being further mobile in translation and/or in rotation relative to the seat (11) from the unfolded position to an offset unfolded position,
**characterized in that**, when the tray tables (19) of the two seats (11) are in the unfolded position and a partition wall (41) between the two seats (11) is brought into a retracted position, said tray tables (19) are positioned next to each other so that a gap between two side edges (22) of the tray tables (19) facing each other is less than 50cm, preferably less than 30cm, so as to create a collaborative work area.

2. The seat module (10) according to claim 1, **characterized in that** an axis (X3) normal to a rear face of the tray table (19), when the tray table (19) is in the folded position, is inclined relative to an extension axis (X1) of said seat (11) .

3. The seat module (10) according to claim 1 or 2, **characterized in that** the seat (11) has an extension axis (X1) and the tray table (19) has at least one side edge (22) of the tray table (19) inclined relative to the extension axis (X1) of the seat (11), when the tray table (19) is in the unfolded position and/or substantially parallel to the extension axis (X1) of the seat (11), when the tray table (19) is in the offset unfolded position.

4. The seat module (10) according to claim 3, **characterized in that** the tray table (19) is further movable in translation in a direction parallel to the extension axis (X1) of the seat (11) around the offset unfolded position.

5. The seat module (10) according to any one of the claims 1 to 4, **characterized in that** the tray table (19) comprises a support (29) mounted so as to be movable in rotation relative to the shell (15), in particular via a hinge (30).

6. The seat module (10) according to claim 5, **characterized in that** the tray table (19) comprises a plate (31) movable in translation and/or in rotation relative to the support (29).

7. The seat module (10) according to any one of the claims 1 to 6, **characterized in that** it further comprises a shell (15) partially surrounding the seat (11).

8. The seat module (10) according to claim 7, **characterized in that** a portion (32) of the shell (15) and a rear face of the seat (11) define an internal volume (34) accessible through an opening (35) in said shell (15), in particular closed by the tray table (19) when the tray table (19) is in the folded position.

9. The seat module (10) according to claim 8, **characterized in that** a storage device (38) is positioned inside the internal volume (34).
